# EUROPEAN PATENT APPLICATION

(11) **EP 1 640 956 A2**
(43) Date of publication of application: **29.03.2006**
(21) Application number: 05255680.0
(22) Date of filing: 14.09.2005
(51) Int. Cl.: G09G 3/34

(54) **System and method for MEMS display device**

(30) Priority: 27.09.2004 US 613418 P; 18.02.2005 US 62143
(71) Applicant: IDC, LLC, San Francisco, CA 94107 (US)
(72) Inventor: Tyger, Karen, Foster City, California 94404 (US)
(74) Representative: Dunlop, Hugh Christopher

(57) **Abstract**

Due to the bi-stable nature of interferometric modulator elements, the state of each modulator element may be held at either an actuated or a released state with a common voltage difference. Because modulator elements often require less time to change states than is allotted in a line time, power drawn by an array of modulator elements may be reduced by disabling one or both of a row and column voltage boost module, which are configured to amplify an input power source to a level that is suitable for driving modulator elements. If the column voltage is removed during the latter portion of a line time, for example, the row voltage is set to a level that is sufficient to maintain a voltage difference between the row voltage and the floating column voltage within a stability voltage range during the remainder of the line time.

## Description

### Background

Microelectromechanical systems (MEMS) include micro mechanical elements, actuators, and electronics. Micromechanical elements may be created using deposition, etching, and or other micromachining processes that etch away parts of substrates and/or deposited material layers or that add layers to form electrical and electromechanical devices. One type of MEMS device is called an interferometric modulator. An interferometric modulatormay comprise a pair of conductive plates, one or both of which may be partially transparent and capable of relative motion upon application of an appropriate electrical signal. One plate may comprise a stationary layer deposited on a substrate, the other plate may comprise a metallic membrane suspended over the stationary layer. Such devices have a wide range of applications, and it would be beneficial in the art to utilize and/or modify the characteristics of these types of devices so that their features can be exploited in improving existing products and creating new products that have not yet been developed.

### Summary

The system, method, and devices of the invention each have several aspects, no single one of which is solely responsible for its desirable attributes. Without limiting the scope of this invention, its more prominent features will now be discussed briefly. After considering this discussion, and particularly after reading the section entitled "Detailed Description of Certain Embodiments" one will understand how the features of this invention provide advantages over other display devices.

In one embodiment is provided a display driver comprising a row booster configured to generate a row voltage, a column booster configured to generate a column voltage, an array comprising a plurality of modulator elements, each of the modulator elements being connected to a column electrode and a row electrode and being configured to be driven by the row voltage and the column voltage, wherein a state of the modulator elements in a respective row of the array is configured to be modified during a line time in which the row voltage is connected to the respective row electrode, and a disable module configured to disable one of the boosters during a portion of the line time. The row and column boosters may each comprise at least one of a level shifter, DC-DC conversion circuitry, and an operational amplifier. The disable module may be configured to disable the column booster during the portion of the line time. The row booster may be configured to remain active during the disable portion of the line time to provide a bias voltage on each of the row electrodes. The bias voltage may be about 5 volts. The display driver may further comprise a data enable module configured to output a reference voltage to the column electrodes of the array during the portion of the line time. The disable module may be configured to disable the row booster during the portion of the line time. The column booster may be configured to remain active during the portion of the line time and may provide a bias voltage on each of the column electrodes. The bias voltage may be about 5 volts. The display driver may further comprise a data enable module configured to output a reference voltage to the row electrodes of the array during the portion of the line time. The modulator elements comprise bi-stable elements.

In another embodiment is provided a light modulating display driver comprising means for generating a row voltage, means for generating a column voltage, means for modifying modulator elements in a row of an array during a line time in which the row voltage is connected to the respective row, and means for disabling one of the means for generating a row voltage and the means for generating a column voltage during a portion of the line time.

Still another embodiment provides a method of updating a display region, the display region comprising a plurality of modulator elements arranged in a row and column configuration, wherein the modulator elements each have an actuated and a released state that may be selected by a voltage difference between a row electrode and a column electrode that are each electronically coupled to respective modulator elements, each of the modulator elements being configured to maintain the state of the modulator element when a voltage within a stability window is applied between the row electrode and the column electrode of the respective modulator element, wherein each row of the modulator element is alloted a line time for changing states of the modulator elements of the respective row. The method comprises applying a row voltage to a selected row of modulator elements, applying at least one column voltage to selected columns of modulator elements according to a desired state for the modulator elements of the selected row, and terminating the application of the column voltage prior to the completion of the line time, wherein the state of the modulator elements in the selected row is maintained by a voltage difference between the row voltage and a reference voltage, wherein the voltage difference is within the stability window. The reference voltage may be provided by a data enable module. The method may further comprise enabling the column level shifterat about the end of the line time.

In another embodiment is provided a method of manufacturing a display driver. The method comprises forming a row booster configured to generate a row voltage, forming a column booster configured to generate a column voltage, forming an array comprising a plurality of modulator elements, each of the modulator elements being connected to a column electrode and a row electrode and each being configured to be driven by the row voltage and the column voltage, wherein a state of the modulator elements in a respective row of the array is configured to be modified during a row line time in which the row voltage is connected to the respective row electrode, or wherein a state of the modulator elements in a respective column of the array is configured to be modified during a column line time in which the column voltage is connected to the respective column electrode, and forming a disable module configured to disable one of the boosters during a portion of the row or column line time. The method may further comprise forming a data enable module configured to output a reference voltage to the column electrodes of the array during the portion of the row or column line time. The method may further comprise forming the disable module to be configured to disable the row booster during the portion of the row or column line time. The method may further comprise forming the column booster to be configured to remain active during the portion of the row or column line time and to provide a bias voltage on each of the column electrodes. The method may further comprise forming the modulator elements to comprise bi-stable elements. A display driver may be manufactured by the method. A display may also be manufactured comprising the display driver.

### Brief Description of the Drawings

Figure 1 is an isometric perspective view depicting a portion of one embodiment of an interferometric modulator display in which a movable mirror of a first interferometric modulator is in a reflective, or "on," position at a predetermined distance from a fixed mirror and the movable mirror of a second interferometric modulator is in a non-reflective, or "off" position.
Figure 2 is a system block diagram illustrating one embodiment of an electronic device incorporating a 3x3 interferometric modulator display.
Figure 3 is a diagram of movable mirror position versus applied voltage for one exemplary embodiment of an interferometric modulator of Figure 1.
Figure 4 is an illustration of sets of row and column voltages that may be used to drive an interferometric modulator display.
Figures 5A and 5B illustrate one exemplary timing diagram for row and column signals that may be used to write a frame of display data to the 3x3 interferometric modulator display of Figure 3.
Figure 6A is a cross section of the device of Figure 1.
Figure 6B is a cross section of an alternative embodiment of an interferometric modulator.
Figure 6C is a cross section of an alternative embodiment of an interferometric modulator.
Figure 7 is a timing diagram showing a series of row and column signals applied to the 3x3 array of Figure 2, for example, which will result in the display arrangement illustrated in Figure 5A, where actuated pixels are non-reflective.
Figure 8 is a block diagram of an exemplary display driver that is configured to output driver signals for an array of modulator elements of a display device.
Figure 9 is a block diagram of an exemplary short pulse module that is configured to output an enable signal, which may be provided to the column level shifter of Figure 8 in order to control the operation of the level shifter.
Figure 10 is a flow chart illustrating an exemplary method of controlling a level shifter.
FIGS. 11A and 11B are system block diagrams illustrating an embodiment of a visual display device comprising a plurality of interferometric modulators.

### Detailed Description of Preferred Embodiments

Due to the bi-stable nature of interferometric modulator elements, the state of each modulator element may be held at either an actuated or a released state with a common voltage difference. Because modulator elements often require less time to change states than is allotted in a line time, power drawn by an array of modulator elements may be reduced by disabling one or both of a row and column voltage boost module, which are configured to amplify an input power source to a level that is suitable for driving modulator elements. If the column voltage is removed during the latter portion of a line time, for example, the row voltage is set to a level that is sufficient to maintain a voltage difference between the row voltage and the floating column voltage within a stability voltage range during the remainder of the line time. As used herein, "row" and "column" are not limeted to the conventional connotation of horizontal orientation and vertical orientation, respectively. Although some embodiments maintain this conventional connotation, others do not. In some embodiments rows are vertical and columns are horizontal. In other embodiments rows and columns are neither horizontal nor vertical, and may not be oriented at right angles with respect to one another. As such, herein, the identification as a row versus a column is arbitrary.

The following detailed description is directed to certain specific embodiments of the invention. However, the invention can be embodied in a multitude of different ways. In this description, reference is made to the drawings wherein like parts are designated with like numerals throughout. As will be apparent from the following description, the invention may be implemented in any device that is configured to display an image, whether in motion (e.g., video) or stationary (e.g., still image), and whether textual or pictorial. More particularly, it is contemplated that the invention may be implemented in or associated with a variety of electronic devices such as, but not limited to, mobile telephones, wireless devices, personal data assistants (PDAs), hand-held or portable computers, GPS receivers/navigators, cameras, MP3 players, camcorders, game consoles, wrist watches, clocks, calculators, television monitors, flat panel displays, computer monitors, auto displays (e.g., odometer display, etc.), cockpit controls and/or displays, display of camera views (e.g., display of a rear view camera in a vehicle), electronic photographs, electronic billboards or signs, projectors, architectural structures (e.g., tile layouts), packaging, and aesthetic structures (e.g., display of images on a piece of jewelry). More generally, the invention may be implemented in electronic switching devices.

Spatial light modulators used for imaging applications come in many different forms. Transmissive liquid crystal display (LCD) modulators modulate light by controlling the twist and/or alignment of crystalline materials to block or pass light. Reflective spatial light modulators exploit various physical effects to control the amount of light reflected to the imaging surface. Examples of such reflective modulators include reflective LCDs, and digital micromirror devices.

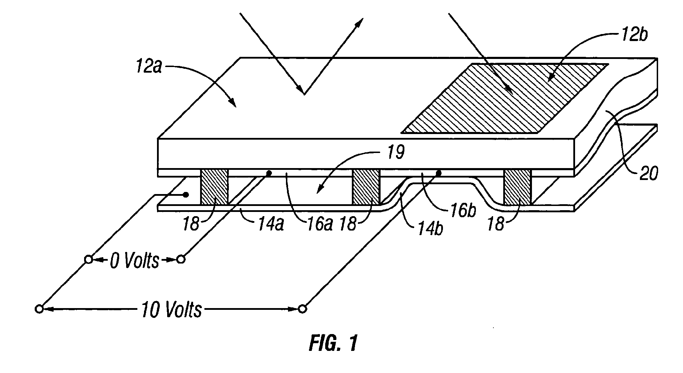

Another example of a spatial light modulator is an interferometric modulator that modulates light by interference. One interferometric modulator display embodiment comprising a reflective MEMS display element is illustrated in Figure 1. In these devices, the pixels are in either a bright or dark state. In the bright ("on" or "open") state, a bi-stable display element reflects incident light to a user. When in the dark ("off" or "closed") state, a bi-stable display element is light absorbing and reflects little light to the user. Depending on the embodiment, the display 110 may be configured to reflect light in the "off" state and absorb light in the "on" state, i.e., the light reflectance properties of the "on" and "off" states are reversed. MEMS pixels can also be configured to reflect only selected colors, producing a color display rather than black and white.

Figure 1 is an isometric perspective view depicting two adjacent pixels in a row of one embodiment of a visual display, comprising a MEMS interferometric modulator. An interferometric modulator display comprises a row/column array of these interferometric modulators. Each interferometric modulator includes a pair of mirrors positioned at a distance from each other to form a resonant optical cavity. In one embodiment, one of the mirrors may be moved between at least two positions. In the first position, the movable mirror is positioned at a first distance from the other mirror so that the interferometric modulator is predominantly reflective. In the second position, the movable mirror is positioned at a different distance, e.g., adjacent to the fixed mirror, such that the interferometric modulator is predominantly absorbing.

The depicted portion of the pixel array includes two adjacent interferometric modulators 12a and 12b in a row. In the depicted embodiment of the interferometric modulator, a movable mirror 14a is illustrated in the reflective ("released", "on", or "open") position at a predetermined distance from a fixed, partial mirror 16a, 16b. The movable mirror 14b of the interferometric modulator 12b is illustrated in the non-reflective, absorbent ("actuated", "off", or "closed") position adjacent to the partial mirror 16b.

The fixed mirrors 16a, 16b are electrically conductive, and may be fabricated, for example, by depositing layers of chromium and indium-tin-oxide onto a transparent substrate 18 that are patterned into parallel strips, and may form column electrodes. The movable mirrors 14a, 14b along the row may be formed as a series of parallel strips of a deposited metal layer or layers (orthogonal to the column electrodes 16a, 16b) on the substrate 18, with aluminum being one suitable material, and may form row electrodes.

When a potential difference is applied to a selected row and column, the capacitor formed at the intersection of the row and column electrodes at the corresponding pixel charges, and electrostatic forces pull the electrodes together. If the voltage is high enough, the movable electrode is forced against the stationary electrode (a dielectric material may be deposited on the stationary electrode to prevent shorting and control the separation distance) as illustrated by the pixel on the right in Figure 1. The behavior is the same regardless of the polarity of the applied potential difference. In this way, row/column actuation can control the reflective vs. absorbing state of each pixel.

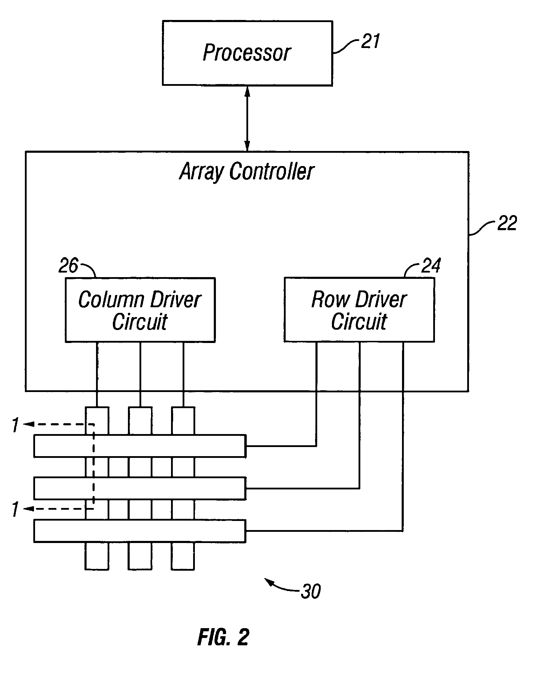

Figures 2 through 5 illustrate one exemplary process and system for using an array of interferometric modulators in a display application. Figure 2 is a system block diagram illustrating one embodiment of an electronic device that may incorporate aspects of the invention. In the exemplary embodiment, the electronic device includes a processor 20 which may be any general purpose single- or multi-chip microprocessor such as an ARM, Pentium® , Pentium II® , Pentium III® , Pentium IV®, Pentium® Pro, an 8051, a MIPS®, a Power PC®, an ALPHA®, or any special purpose microprocessor such as a digital signal processor, microcontroller, or a programmable gate array. As is conventional in the art, the processor 20 may be configured to execute one or more software modules. In addition to executing an operating system, the processor may be configured to execute one or more software applications, including a web browser, a telephone application, an email program, or any other software application.

In one embodiment, the processor 20 is also configured to communicate with an array controller 22. In one embodiment, the array controller 22 includes a row driver circuit 24 and a column driver circuit 26 that provide signals to the array 30. The cross section of the array illustrated in Figure 1 is shown by the lines 1-1 in Figure 2. Portions of the array controller 22 as well as additional circuitry and functionality may be provided by a graphics controller which is typically connected between the actual display drivers and a general purpose microprocessor. Exemplary embodiments of the graphics controller include 69030 or 69455 controllers from Chips and Technology, Inc., the S1D1300 series from Seiko Epson , and the Solomon Systech 1906.

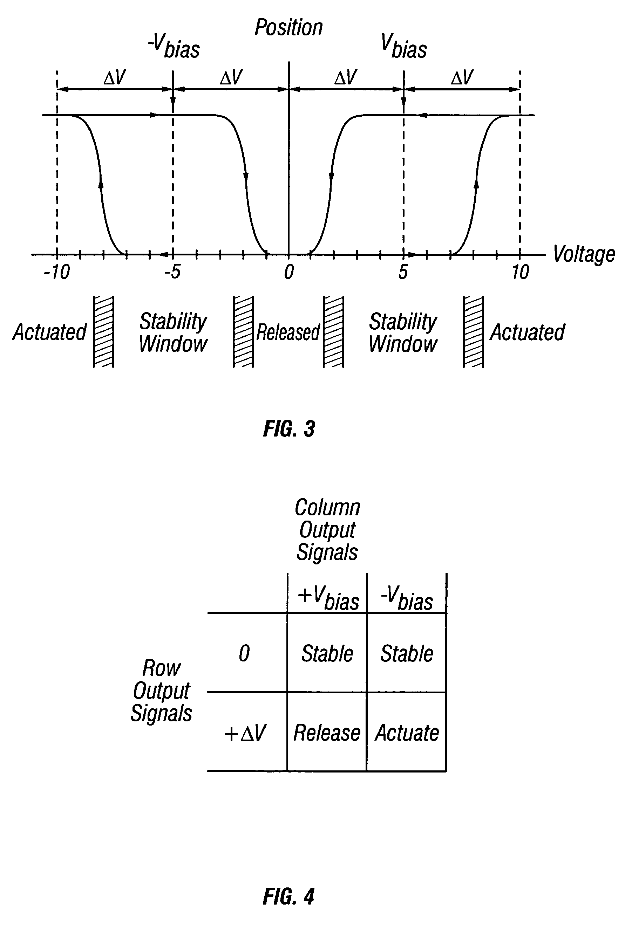

For MEMS interferometric modulators, the row/column actuation protocol may take advantage of a hysteresis property of these devices illustrated in Figure 3. It may require, for example, a 10 volt potential difference to cause a pixel to deform from the released state to the actuated state. However, when the voltage is reduced from that value, the pixel may not release until the voltage drops below 2 volts. There is thus a range of voltage, about 3 to 7 V in the example illustrated in Figure 3, where there exists a stability window within which the device will remain in whatever state it started in. The row/column actuation protocol is therefore designed such that during row strobing, pixels in the strobed row that are to be actuated are exposed to a voltage difference of about 10 volts, and pixels that are to be released are exposed to a voltage difference of close to zero volts. After the strobe, the pixels are exposed to a steady state voltage difference of about 5 volts such that they remain in whatever state the row strobe put them in. After being written, each pixel sees a potential difference within the "stability window" of 3-7 volts in this example. This feature makes the pixel design illustrated in Figure 1 stable under the same applied voltage conditions in either an actuated or released pre-existing state. Since each pixel of the interferometric modulator, whether in the actuated or released state, is essentially a capacitor formed by the fixed and moving mirrors, this stable state can be held at a voltage within the hysteresis window with almost no power dissipation. Essentially no current flows into the pixel if the mirror is not moving and the applied potential is fixed.

In typical applications, a display frame may be created by asserting the set of column electrodes in accordance with the desired set of actuated pixels in the first row. A row pulse is then applied to the row 1 electrode, actuating the pixels corresponding to the asserted column lines. The asserted set of column electrodes is then changed to correspond to the desired set of actuated pixels in the second row. A pulse is then applied to the row 2 electrode, asserting the appropriate pixels in row 2 in accordance with the asserted column electrodes. The row 1 pixels are unaffected by the row 2 pulse, and remain in the state they were set to during the row 1 pulse. This may be repeated for the entire series of rows in a sequential fashion to produce the frame. Generally, the frames are refreshed and/or updated with new display data by continually repeating this process at some desired number of frames per second. A wide variety of other protocols for driving row and column electrodes of pixel arrays to produce display frames are also well known and may be used in conjunction with the present invention.

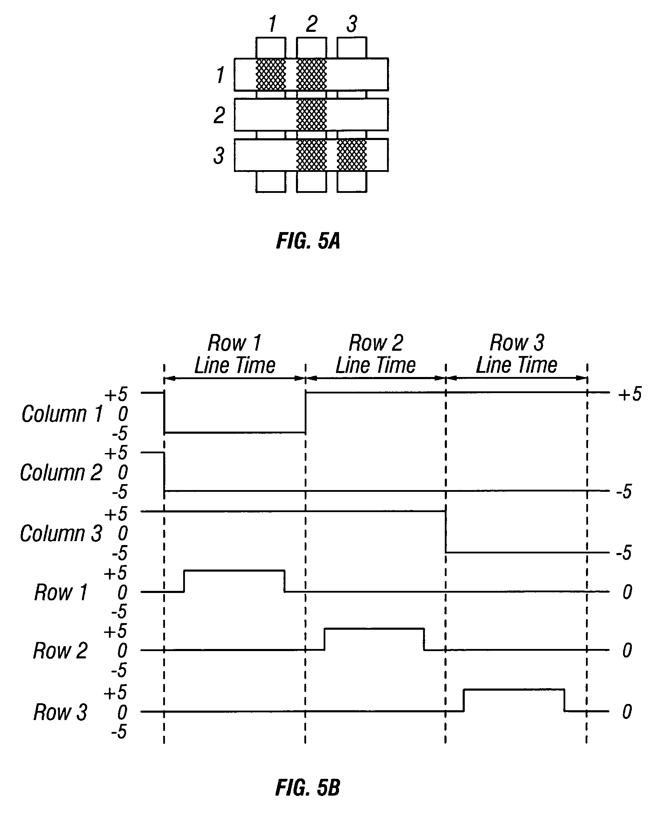

Figures 4 and 5 illustrate one possible actuation protocol for creating a display frame on the 3x3 array of Figure 2. Figure 4 illustrates a possible set of column and row voltage levels that may be used for pixels exhibiting the hysteresis curves of Figure 3. In the Figure 4 embodiment, actuating a pixel involves setting the appropriate column to -V_{bias}, and the appropriate row to +ΔV. Releasing the pixel is accomplished by setting the appropriate column to +V_{bias}, and the appropriate row to the same +ΔV. In those rows where the row voltage is held at zero volts, the pixels are stable in whatever state they were originally in, regardless of whether the column is at +V_{bias}, or -V_{bias}.

Figure 5B is a timing diagram showing a series of row and column signals applied to the 3x3 array of Figure 2 which will result in the display arrangement illustrated in Figure 5A, where actuated pixels are non-reflective. Prior to writing the frame illustrated in Figure 5A, the pixels can be in any state, and in this example, all the rows are at 5 volts, and all the columns are at 10 volts. In this state, all pixels are stable in their existing actuated or released states.

In the Figure 5A frame, pixels (1,1), (1,2), (2,2), (3,2) and (3,3) are actuated. To accomplish this, during a "line time" for row 1, columns 1 and 2 are set to 0 volts, and column 3 is set to 10 volts. This does not change the state of any pixels, because all the pixels remain in the 3-7 volt stability window. Row 1 is then strobed with a pulse that goes from 5 volts, up to 10 volts, and back to 5 volts. This actuates the (1,1) and (1,2) pixels and releases the (1,3) pixel. No other pixels in the array are affected. To set row 2 as desired, column 2 is set to 0 volts, and columns 1 and 3 are set to 10 volts. The same strobe applied to row 2 will then actuate pixel (2,2) and release pixels (2,1) and (2,3). Again, no other pixels of the array are affected. Row 3 is similarly set by setting columns 2 and 3 to 0 volts, and column 1 to 10 volts. The row 3 strobe sets the row 3 pixels as shown in Figure 5A. After writing the frame, the row potentials are zero, and the column potentials can remain at either 10 or 0 volts, and the display is then stable in the arrangement of Figure 5A. It will be appreciated that the same procedure can be employed for arrays of dozens or hundreds of rows and columns. It will also be appreciated that the timing, sequence, and levels of voltages used to perform row and column actuation can be varied widely within the general principles outlined above, and the above example is exemplary only, and any actuation voltage method can be used with the present invention.

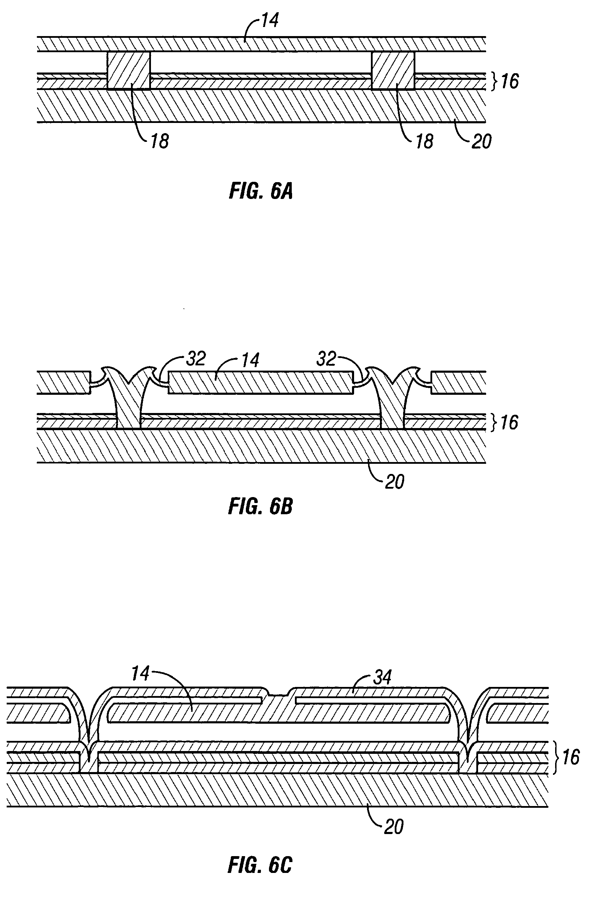

The details of the structure of interferometric modulators that operate in accordance with the principles set forth above may vary widely. For example, Figures 6A-6C illustrate three different embodiments of the moving mirror structure. Figure 6A is a cross section of the embodiment of Figure 1, where a strip of metal material 16 is deposited on orthogonally extending supports 18. In Figure 6B, the moveable mirror is attached to the supports at the corners only, on tethers 32. In Figure 6C, the mirror 16 is suspended from a deformable film 34. This embodiment has benefits because the structural design and materials used for the mirror 16 can be optimized with respect to the optical properties, and the structural design and materials used for the deformable layer 34 can be optimized with respect to desired mechanical properties. The production of various types of interferometric devices is described in a variety of published documents, including, for example, U.S. Published Application 2004/0051929, which is incorporated by reference in its entirety.

Low power consumption on electronic devices, and especially those devices that are powered by batteries, such as portable devices, is desirable. The electronics that drive the display typically consume a large portion of the total device power and, thus, decreasing the power consumption of driver electronics is desirable.

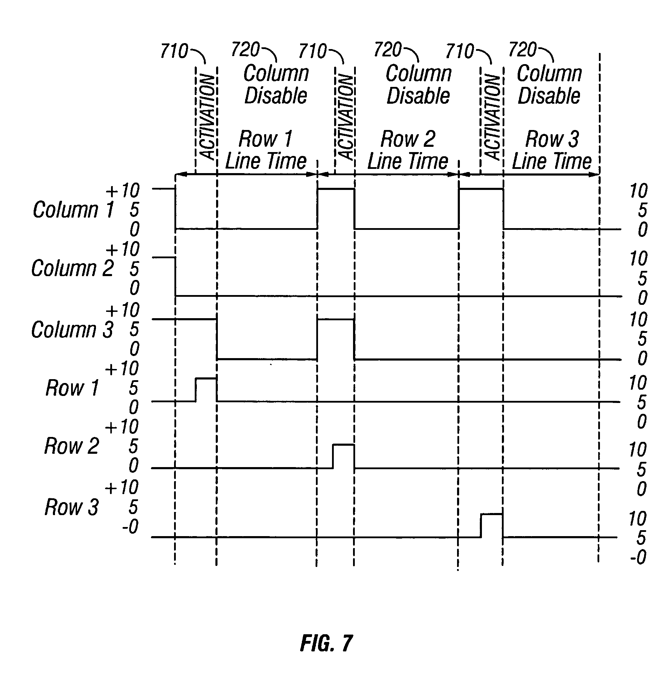

Figure 7 is a timing diagram showing a series of row and column signals applied to the 3x3 array of Figure 2, for example, which will result in the display arrangement illustrated in Figure 5A, where actuated pixels are non-reflective. In the embodiment of Figure 7, the array of modulator elements are each actuated by a voltage difference of about 10 volts, released by a voltage difference of about 0 volts, and maintained at their position by a stability voltage difference in the range of about 3 to 7 volts. In other embodiments the row and column voltages may be set to any level that is suitable for driving the modulator elements of the display

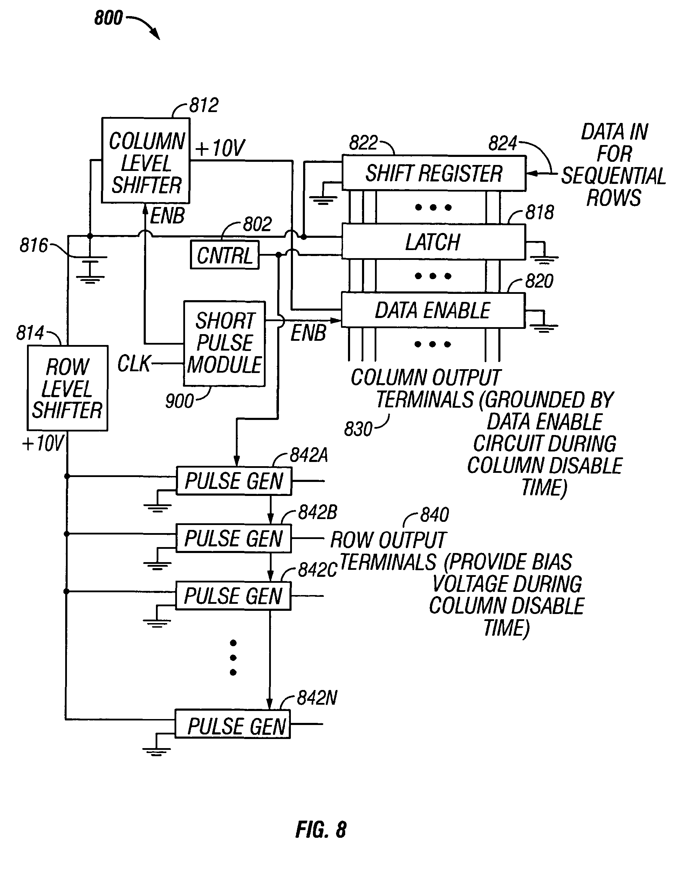

In the Figure 5A frame, pixels (1,1), (1,2), (2,2), (3,2) and (3,3) are actuated. Thus, during the Row 1 line time, the Row 1 voltage is strobed with a pulse that goes from 5 volts, up to 10 volts, and back to 5 volts. Near the beginning of the Row 1 line time, Columns 1 and 2 are set to 0 volts and Column 3 is set to 10 volts. Accordingly, the (1,1) and (1,2) pixel are actuated (due to the about 10 volts applied across the modulator elements) and the (1,3) pixel is released (due to the about 0 volts applied across the modulator element). In the embodiment of Figure 7, the Row 1 elements are changed to their desired states, as indicated above, during an activation time 710 in which the row voltage is strobed and the column voltages are set to the appropriate levels according to a data signal 804 (Figure 8). As illustrated in Figure 7, the activation time 710 is less than the line time. In one embodiment, an interferometric modulator needs about 10 microseconds to change states and, therefore, the activation time is set to about 10 microseconds. However, in other embodiments the activation time 710 may be set to any other value that is less than the line time.

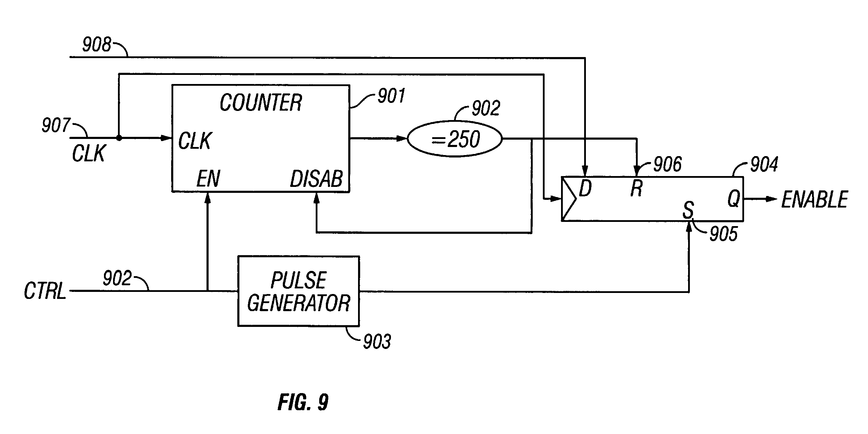

After the activation time 710, the state of the elements in Row 1 may be maintained by application of the stability voltage of about 5 volts, for example, across each of the modulator elements in Row 1. Advantageously, a column level shifter 812 (Figure 8) that is configured to supply the voltages that are applied to the column terminals may be disabled after the activation time 710, thereby reducing the power drawn from a power source during the column disable time 720. Disabling the level shifter may include disconnecting the level shifter 812 from at least one of its power supply, ground supply, and the column load. Other disabling mechanisms are also possible. Some disabling mechanisms may include the use of input data as a signal. A data enable module 820 (Figure 8) may be configured to ground the column terminals of the array of modulator elements during this column disable time 720. Thus, with 0 volts on each of the columns of the array and 5 volts on the Rows, about 5 volts is applied across each modulator element, maintaining each modulator element in its current state. The short pulse module 900 (Figures 8 and 9) may enable the column level shifter 812 (Figure 8) near the end of the current line time or similarly near the beginning of a subsequent line time so that the appropriate voltage levels for the next row are provided to the column terminals.

Figure 8 is a block diagram of an exemplary display driver 800 that is configured to output driver signals for an array of modulator elements of a display device. In particular, the display driver 800 outputs signals on row output terminals 840 that are coupled to each of the rows of modulator elements and signals on column output terminals 830 that are coupled to each of the columns of modulator elements. Advantageously, the display driver 800 disables at least a portion of its circuitry during the column disable time 720, thereby reducing the power consumed by the display driver 800. In the exemplary embodiment of Figure 8, during the column disable time 720 the column output terminals are grounded and the row output terminals 840 provide a bias voltage, e.g., 5 volts.

The exemplary display device 800 includes a column level shifter 812 and a row level shifter 814, which are each electrically coupled to a power source 806, such as a battery. The level shifters 812, 814 are configured to modify the voltage signal supplied by the power source 806 to provide one or more voltage levels that are necessary for driving the modulator elements of the array. For example, modulator elements in an exemplary array may require a voltage difference of 10 volts in order to actuate, and a voltage difference of 5 volts to maintain a state. If the power source 806 provides only 3 volts, the electrical signal from the power source 806 requires boosting in order to provide the voltage levels necessary to actuate modulator elements. The voltages for the row terminals, such as five and ten volts, are provided by the row level shifter 814 and the voltages for the column terminals, such as five and ten volts, are provided by the column level shifter 814.

Each of the level shifters 812, 814 may include multiple DC-DC conversion circuitry, operational amplifiers, etc., configured to boost the electrical signal from the power source 816 to one or more desired levels. While the embodiments described herein discuss the use of a voltage booster configured to increase the source voltage to a voltage necessary for driving the modulator elements, those of skill in the art will recognize that in other embodiments the level shifters 812, 814 may be configured to reduce the input voltage to a voltage necessary to drive the modulator elements.

The exemplary display driver 800 includes a shift register 822 that receives data 824 indicating the desired states of each of the modulator elements in a row of the array. In one embodiment, the shift register 822 has a width that is equal to the number of columns in the array of modulator elements. Accordingly, the shift register 822 may store data indicative of a next state of an entire row of modulator elements. A latch 818 is coupled to the shift register 822 and is configured to receive the data 824 from the shift register 822. In one embodiment, latch 818 outputs the data received from the shift register 822 at the beginning of each line time. A data enable module 820 is electrically coupled to the latch 818 and is configured to control when the data should be provided to the column output terminals 830. In one embodiment, the data enable module 820 is configured to output data for a current row of modulator elements during the activation time 710 for that row.

In the embodiment of Figure 8, the data enable module 820 is electrically coupled to the column level shifter 812 so that the appropriate voltage levels are provided to the column output terminals 830. For example, the data 824 may contain binary data in the form of 3 volt and 0 volt signals indicative of desired states of modulator elements. In the embodiment of Figure 8, the data enable module 820 is configured to output a 10 volt signal on each column output terminal 830 that corresponds with a 3 volt signal received from the latch 818. Accordingly, the state of the modulator elements may be stored in the shift register 824 and latch 818 using lower voltage levels than are necessary to change the state of modulator elements.

In the embodiment of Figure 8, a control signal (CTRL) module 702 is coupled to the latch 718 and is configured to provide a horizontal sync output signal indicating when a new line time begins. In one embodiment, the latch 818 latches the shift register 822 outputs to the latch outputs when the control module 702 indicates that a new line time has started. This data is then passed through the data enable module 820 during the activation time to the column output terminals.

As illustrated in Figure 8, the exemplary display driver 800 includes a short pulse module 820 that is configured to provide an enable signal that may be used to control the operation of the column level shifter 812 as well as the data enable module 820. In general, the short pulse module 820 is configured to disable the column level shifter 814 after the activation time 710 has passed and cause the column level shifter 814 to remain deactivated until the next line time begins. In this way, the column level shifter 814 is disabled for a portion of each line time, the power used by the column level shifter 814 is decreased, and the power consumed by the array of modulator elements is decreased. In one embodiment, the short pulse module 820 is also coupled to the data enable module 820 and provides a signal indicating when the output to all of the columns should be set to ground. In particular, during the column disable time 720 (Figure 7), while the column level shifter 812 is disabled, the short pulse module 820 may signal to the data enable module 820 that the column output terminals 830 should all be grounded. In this way, the column output terminals 830 are prevented from floating during the disable time 720 while the column level shifter 812 is disabled. With the row level shifter 814 remaining on during the column disable time 720, a bias voltage, such as 5 volts, will be maintained on the modulator elements by providing the bias voltage on the row output terminals 840. As noted above, the short pulse module 820 is configured so that deactivation of the column level shifter 812 occurs only after the modulator elements of the current row of the array have had sufficient time to change states, where necessary.

In one embodiment, short pulse module 820 also controls the length of the Row strobe time, e.g., the time that the Row voltage goes to 10 volts in the example of Figure 7, as well as the deactivation of the column level shifter 812. Exemplary display driver 800 includes a pulse generator 842 coupled to each of the row output terminals. The pulse generators 842 are configured to sequentially provide the row strobe to rows of the array. For example, during a first line time, pulse generator 842A may provide a row strobe to a first row of the array, during a second line time, pulse generator 842B may provide a row strobe to a second row of the array, and so on. In the embodiment of Figure 8, the control module 802 is electrically coupled to the pulse generators 842 and indicates when each sequential line time begins.

In one embodiment, the Row strobe time is substantially equal to the activation time 710. In this embodiment, the row output terminals 840 return to a bias voltage,e.g., 5 volts, during the column disable time 720. In one embodiment, the short pulse module 820 provides an enable signal (not shown) to the pulse generators 842 indicating when the row voltage terminals 740 should be returned to their bias voltage. In one embodiment, when the enable signal from the short pulse module 820 is asserted, both the row and column level shifters 812, 814 are active and the selected pulse generator 842 outputs 10 volts to its respective row output terminal. In this embodiment, when the enable signal is deasserted, such as at the end of activation time 710, the selected pulse generator 842 returns to 5 volts, the column level shifter 812 is disabled, and the data enable grounds the column output terminals 830. Thus, when the enable signal is deasserted, the column level shifter 812 is not active and does not draw power from the power supply 816.

While operation of the display driver 800 has been described with reference to disabling of the column level shifter 812 during a portion of the line time, in other embodiments that will be apparent to those of ordinary skill in the art, the row level shifter 814 may be disabled rather than the column level shifter 812.

The short pulse module 820 may comprise various combinations of electrical components that are configured to disable the column boost module 814 after the activation time. Figure 9, described in detail below, is a block schematic of one exemplary configuration of components that may be used in a short pulse module 820.

Figure 9 is a block diagram of an exemplary short pulse module 900 that is configured to output an enable signal, which may be provided to the column level shifter 812 (Figure 8) in order to control the operation of the level shifter. In one embodiment, the enable signal may also be transmitted to the pulse generator 842 (Figure 8) in order to control the row strobe time. The exemplary short pulse module 900 includes 3 inputs, an activation signal 908, which provides a desired signal level for the enable signal, a Clock signal (CLK) 1007, and a CTRL signal 902, such as from the CTRL module 802.

In the embodiment of Figure 9, CLK 802 may be a square wave oscillating at 25 MHz, which is a typical VGA data rate. Alternatively, CLK 802 may be any other frequency of clock signal. A counter 901 is configured to count every CLK pulse and the CTRL signal 902 input resets the counter 901 to zero at the beginning of each line time. A set-reset flip-flop 904 provides the enable output. As those of skill in the art will recognize, the flip-flop 904 is triggered to output the activation signal 908 when the set input 905 is asserted. In one embodiment, when the enable signal is equal to the activation signal 908, the selected Row is strobed and the column level shifter 812 is active. The output of the flip-flop 904 is held until a signal is asserted at a reset input 906.

In operation, a pulse generator 903 may be used to generate a one CLK wide pulse when the CTRL signal 902 is asserted, thus asserting the set signal 905 and configuring the flip-flop 1004 to output the enable signal. An equivalence circuit 902 outputs a one CLK wide pulse when the count in the counter 901 is equal to a predetermined value that is representative of the activation time 710. The output from the equivalence circuit 902 disables the counter 901, which will be re-enabled when the CTRL signal 902 is next asserted, indicating a new line time. The output from the equivalence circuit 902 also asserts the reset input 906, which deasserts the enable signal. In one embodiment, when the enable signal is deasserted, the output of the short pulse module 900 is equal to zero, the selected Row is returned to a bias voltage, e.g., 5 volts in the embodiment of Figures 7 and 8, the data enable circuit grounds the column electrodes, and the column level shifter 812 is disabled. In this way, the short pulse module 900 controls the time in which column level shifter 812 is active.

In one embodiment, the activation time 710 may be a minimum time required to change states of an interferometric modulator. However, this circuit may be used in conjunction with other types of displays in order to reduce the pulses provided to the displays. A short pulse module, such as the short pulse module 900, may be coupled to existing display drivers or may be incorporated in the display device.

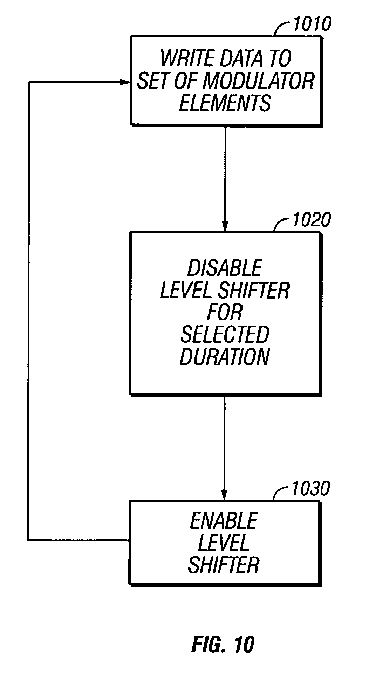

Figure 10 is a flow chart illustrating an exemplary method of controlling a level shifter. As described above, by reducing the time that either the row or column level shifter is activated, the total power drawn by a display driver may be reduced and the life of the power supply may be extended.

In a block 1010, data is written to a set of modulator elements in an array of modulator elements. In one embodiment, an array of modulator elements is refreshed by sequentially updating rows of elements. In this embodiment, the set of modulator elements comprises one or more rows of modulator elements. In an advantageous embodiment, the set of modulator elements comprises one row of modulator elements.

In another embodiment, the set of modulator elements may comprise a column of elements or any other subset of modulator elements in the array. For example, in one embodiment a portion of modulator elements of an array may require less frequent updates than another portion of the array. Accordingly, the set of modulator elements may include a portion of only those modulator elements that require more frequent updates.

In a block 1020, one of the level shifters that provide an amplified power signal to the display driver are disabled for a predetermined time. In the embodiment of Figures 7 and 8, for example, the column level shifter 812 is disabled during a column disable time 720. In another embodiment, the row level shifter may be disabled during a similar portion of each line time. In this embodiment, the column level shifter may be configured to provide a bias voltage to the modulator elements while the row level shifter is disabled. In an advantageous embodiment, the time during which one of the level shifters is disabled is greater than the time required for the modulator elements in the array to change states.

In a block 1030, the disabled level shifter is re-enabled. In the embodiment of Figures 7 and 8, for example, the column level shifter 812 is re-enabled near the beginning of each line time. Thus, the column level shifter 812 is able to provide the appropriate voltage levels to the data enable module 820 for setting the state of the modulator elements. In one embodiment, the column level shifter 812 is enabled prior to the start of a new line time so that the amplified voltage levels are available to the data enable module 820 when the line time begins. In another embodiment, the column level shifter 812 is enabled after the start of a line time and prior to an activation time, such as activation time 720. In an embodiment where the row level shifter is disabled during a portion of the line time, the row level shifter is re-enabled in block 1030.

With the level shifter re-enabled, the method returns to block 1010 and repeats blocks 1010, 1020, and 1030 for another set of modulator elements, such as another row of display elements.

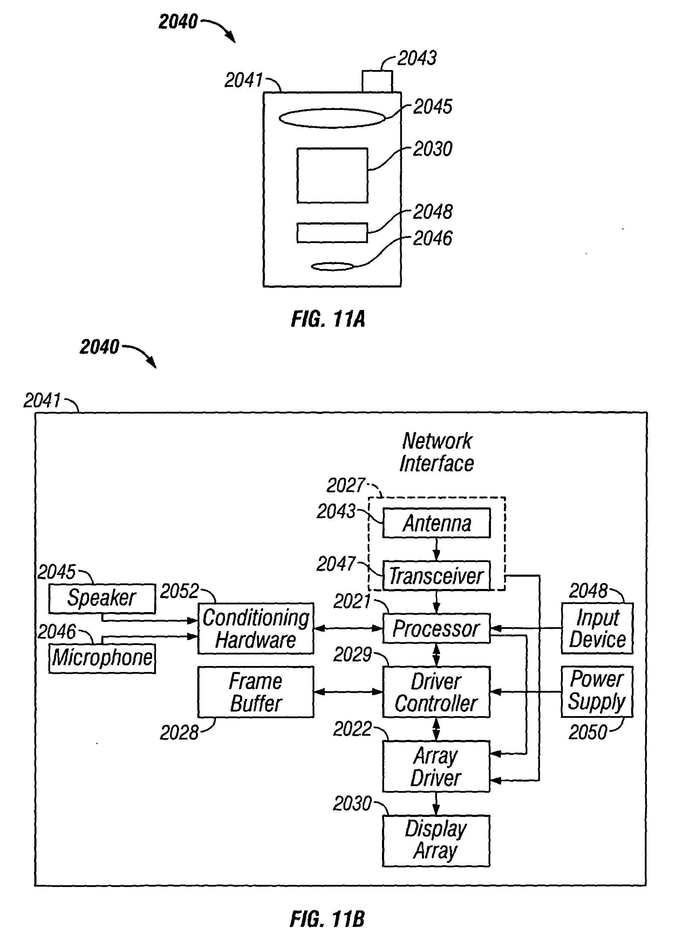

Figures 11A and 11B are system block diagrams illustrating an embodiment of a display device 2040. The display device 2040 can be, for example, a cellular or mobile telephone. However, the same components of display device 2040 or slight variations thereof are also illustrative of various types of display devices such as televisions and portable media players.

The display device 2040 includes a housing 2041, a display 2030, an antenna 2043, a speaker 2045, an input device 2048, and a microphone 2046. The housing 2041 is generally formed from any of a variety of manufacturing processes as are well known to those of skill in the art, including injection molding, and vacuum forming. In addition, the housing 2041 may be made from any of a variety of materials, including but not limited to plastic, metal, glass, rubber, and ceramic, or a combination thereof. In one embodiment the housing 2041 includes removable portions (not shown) that may be interchanged with other removable portions of different color, or containing different logos, pictures, or symbols.

The display 2030 of exemplary display device 2040 may be any of a variety of displays, including a bi-stable display, as described herein. In other embodiments, the display 2030 includes a flat-panel display, such as plasma, EL, OLED, STN LCD, or TFT LCD as described above, or a non-flat-panel display, such as a CRT or other tube device, as is well known to those of skill in the art. However, for purposes of describing the present embodiment, the display 2030 includes an interferometric modulator display, as described herein.

The components of one embodiment of exemplary display device 2040 are schematically illustrated in Figure 11B. The illustrated exemplary display device 2040 includes a housing 2041 and can include additional components at least partially enclosed therein. For example, in one embodiment, the exemplary display device 2040 includes a network interface 2027 that includes an antenna 2043 which is coupled to a transceiver 2047. The transceiver 2047 is connected to the processor 2021, which is connected to conditioning hardware 2052. The conditioning hardware 2052 may be configured to condition a signal (e.g. filter a signal). The conditioning hardware 2052 is connected to a speaker 2045 and a microphone 2046. The processor 2021 is also connected to an input device 2048 and a driver controller 2029. The driver controller 2029 is coupled to a frame buffer 2028 and to the array driver 2022, which in turn is coupled to a display array 2030. A power supply 2050 provides power to all components as required by the particular exemplary display device 2040 design.

The network interface 2027 includes the antenna 2043 and the transceiver 2047 so that the exemplary display device 2040 can communicate with one or more devices over a network. In one embodiment the network interface 2027 may also have some processing capabilities to relieve requirements of the processor 2021. The antenna 2043 is any antenna known to those of skill in the art for transmitting and receiving signals. In one embodiment, the antenna transmits and receives RF signals according to the IEEE 802.11 standard, including IEEE 802.11 (a), (b), or (g). In another embodiment, the antenna transmits and receives RF signals according to the BLUETOOTH standard. In the case of a cellular telephone, the antenna is designed to receive CDMA, GSM, AMPS or other known signals that are used to communicate within a wireless cell phone network. The transceiver 2047 pre-processes the signals received from the antenna 2043 so that they may be received by and further manipulated by the processor 2021. The transceiver 2047 also processes signals received from the processor 2021 so that they may be transmitted from the exemplary display device 2040 via the antenna 2043.

In an alternative embodiment, the transceiver 2047 can be replaced by a receiver. In yet another alternative embodiment, network interface 2027 can be replaced by an image source, which can store or generate image data to be sent to the processor 2021. For example, the image source can be a digital video disc (DVD) or a hard-disc drive that contains image data, or a software module that generates image data.

While the above detailed description has shown, described, and pointed out novel features of the invention as applied to various embodiments, it will be understood that various omissions, substitutions, and changes in the form and details of the device or process illustrated may be made by those skilled in the art without departing from the spirit of the invention. As will be recognized, the present invention may be embodied within a form that does not provide all of the features and benefits set forth herein, as some features may be used or practiced separately from others.

## Claims

1. A light modulating display driver system comprising:
means for generating one or more row voltages for connection to row electrodes;
means for generating one or more column voltages for connection to column electrodes;
means for modifying modulator display elements in a row of an array during a line time in which the row voltage is connected to the respective row; and
means for disabling at least one of the means for generating a row voltage and the means for generating a column voltage during a portion of the line time.

2. The system of Claim 1, wherein the row voltage generating means and the column voltage generating means each comprise at least one of a level shifter, DGDC conversion circuitry, and an operational amplifier.

3. The system of Claim 1 or Claim 2, wherein the modulator elements comprise row and column electrodes and the modifying means comprises a display driver circuit configured to drive the row and column electrodes.

4. The system of Claims 1, 2 or 3, wherein the modulator elements comprise row and column electrodes and the disabling means comprises a display driver circuit configured to selectively drive the row and column electrodes based on input from timing circuitry.

5. The system of Claim 1, wherein the modifying means is configured to modify the state of each element of an array comprising a plurality of modulator elements, each of the modulator elements being connected to a column electrode and a row electrode and each being configured to be driven by the row voltage and the column voltage.

6. The system of Claim 1, wherein the modulator display elements comprise bi-stable elements.

7. The system of Claim 1, wherein the disabling means is configured to disable the column voltage generating means during the portion of the line time.

8. The system of Claim 7, wherein the row voltage generating means is configured to remain active during the disable portion of the line time and to provide a bias voltage on each of the rows.

9. The system of Claim 7, further comprising means for driving a reference voltage onto the column electrodes of the array during the portion of the line time.

10. The system of Claim 9, wherein the driving means comprises a column booster.

11. The system of Claim 1, wherein the disabling means is configured to disable the row voltage generating means during the portion of the line time.

12. The system of Claim 11, wherein the column voltage generating means is configured to remain active during the portion of the line time and provides a bias voltage on each of the columns.

13. The system of Claim 11, further comprising means for driving a reference voltage onto the row electrodes of the array during the portion of the line time.

14. The system of Claim 13, wherein the driving means comprises a row booster.

15. The system of Claim 1, further comprising:
a processor that is in electrical communication with at least one of said modulator display elements, said processor being configured to process image data; and
a memory device in electrical communication with said processor.

16. The system of Claim 15, further comprising an image source module configured to send image data to said processor.

17. The system of Claim 16, wherein said image source module comprises at least one of a receiver, transceiver, and transmitter.

18. The system of Claim 15, further comprising an input device configured to receive input data and to communicate said input data to said processor.

19. A method of updating a display region, the display region comprising a plurality of modulator elements arranged in a row and column configuration, wherein the modulator elements each have an actuated and a released state that may be selected by a voltage difference between a row electrode and a column electrode that are each electronically coupled to respective modulator elements, each of the modulator elements being configured to maintain the state of the modulator element when a voltage within a stability window is applied between the row electrode and the column electrode of the respective modulator element, wherein each row of the modulator element is allotted a line time for changing states of the modulator elements of the respective row, the method comprising:
applying a row voltage to a selected row of modulator elements;
applying at least one column voltage to selected columns of modulator elements according to a desired state for the modulator elements of the selected row; and
terminating the application of the column voltage prior to the completion of the line time, wherein the state of the modulator elements in the selected row is maintained by a voltage difference between the row voltage and a reference voltage, wherein the voltage difference is within the stability window.

20. The method of Claim 19, wherein the reference voltage is provided by a data enable module.

21. The method of Claim 19, further comprising enabling the column level shifter at about the end of the line time.

22. A method of manufacturing a display driver configured to drive an array comprising a plurality of modulator elements, each of the modulator elements being connected to a column electrode and a row electrode and each being configured to be driven by the row voltage and the column voltage, wherein a state of the modulator elements in a respective row of the array is configured to be modified during a row line time in which the row voltage is connected to the respective row electrode, or wherein a state of the modulator elements in a respective column of the array is configured to be modified during a column line time in which the column voltage is connected to the respective column electrode, the method comprising:
forming a row booster configured to generate a row voltage;
forming a column booster configured to generate a column voltage; and
forming a disable module configured to disable at least one of the boosters during a portion of the row or column line time.

23. The method of Claim 22, further comprising forming a data enable module configured to output a reference voltage to the column electrodes of the array during the portion of the row or column line time.

24. The method of Claim 22, further comprising forming the disable module to be configured to disable the row booster during the portion of the row or column line time.

25. The method of Claim 22, further comprising forming the column booster to be configured to remain active during the portion of the row or column line time and to provide a bias voltage on each of the column electrodes.

26. The method of Claim 22, further comprising forming the modulator elements to comprise bi-stable elements.

27. A display driver manufactured by the method of any one of claims 22 to 26.

28. A display comprising a display driver manufactured or manufacturable by the method of any one of claims 22 to 26.
